# EUROPÄISCHE PATENTANMELDUNG

(11) **EP 4 197 680 A1**
(43) Veröffentlichungstag der Anmeldung: **21.06.2023**
(21) Anmeldenummer: 21215754.9
(22) Anmeldetag: 17.12.2021
(51) Int. Cl.: B23F 19/05, B23F 1/02, B23F 5/04

(54) **VERFAHREN ZUM KONTINUIERLICHEN WÄLZSCHLEIFEN VON INNENVERZAHNUNGEN**

(71) Anmelder: Klingelnberg AG, 8050 Zürich (CH)
(72) Erfinder: Müller, Hartmuth, 42857 Remscheid (DE)
(74) Vertreter: Janke Scholl Patentanwälte PartG mbB

(57) **Zusammenfassung**

Verfahren, mit den Verfahrensschritten:
Bereitstellen einer Innenverzahnung (2);
Bereitstellen eines schneckenförmigen Schleifwerkzeugs (14);
Kontinuierliches Wälzschleifen der Innenverzahnung (2) mittels des schneckenförmigen Schleifwerkzeugs (14);
wobei das schneckenförmige Schleifwerkzeug (14) während des Wälzschleifens relativ zu der Innenverzahnung (2) eine Hubbewegung (H) entlang einer Zahnbreite (ZB) der Innenverzahnung (2) ausführt und
wobei ein Flankenprofil (16) eines mit der Innenverzahnung (2) abwälzenden Schneckengangs (18) des schneckenförmigen Schleifwerkzeugs (14) einem zur Innenverzahnung (2) konjugierten Flankenprofil (20) entspricht.

## Beschreibung

Das Schleifen von Innenverzahnungen ist aufgrund der eingeschränkten Zugänglichkeit der zu schleifenden Zähne eine besondere Herausforderung. Dabei bilden sowohl die benachbarten Zähne der jeweiligen zu schleifenden Zähne als auch der kreisrund umlaufende, die Zähne tragende Grundkörper des betreffenden innenverzahnten Zahnrads potentielle Kollisionsstrukturen, mit denen ein Schleifwerkzeug während der Schleifbearbeitung nicht kollidieren darf.

Innenverzahnungen werden häufig durch Profilschleifen feinbearbeitet. Das Profilschleifen ist jedoch weit weniger effizient als das für Außenverzahnungen weit verbreitete Wälzschleifen.

Vor diesem Hintergrund liegt der Erfindung die technische Problemstellung zugrunde, ein Verfahren zum Schleifen von Innenverzahnungen anzugeben, welches eine effiziente Herstellung von Innenverzahnungen ermöglicht.

Die voranstehend beschriebene technische Problemstellung wird gelöst durch ein Verfahren nach Anspruch 1. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Bereitstellen einer Innenverzahnung; Bereitstellen eines schneckenförmigen Schleifwerkzeugs; Kontinuierliches Wälzschleifen der Innenverzahnung mittels des schneckenförmigen Schleifwerkzeugs; wobei das schneckenförmige Schleifwerkzeug während des Wälzschleifens relativ zu der Innenverzahnung eine Hubbewegung entlang einer Zahnbreite der Innenverzahnung ausführt und wobei ein Flankenprofil eines mit der Innenverzahnung abwälzenden Schneckengangs des schneckenförmigen Schleifwerkzeugs einem zur Innenverzahnung konjugierten Flankenprofil entspricht.

Untersuchungen der Anmelderin haben gezeigt, dass ein Bearbeiten von Innenverzahnungen durch kontinuierliches Wälzschleifen ermöglicht werden kann, soweit ein Flankenprofil des mit der Innenverzahnung abwälzenden Schneckengangs des schneckenförmigen Schleifwerkzeugs als zu der Innenverzahnung konjugiertes Flankenprofil bereitgestellt wird. Durch die Hubbewegung in Zahnbreitenrichtung der Innenverzahnung wird die Innenverzahnung über die gesamte Zahnbreite bearbeitet.

Es kann vorgesehen sein, dass das Flankenprofil des Schleifwerkzeugs einem Flankenprofil einer zu der Innenverzahnung konjugierten Außenverzahnung entspricht, wobei eine Zähnezahl der konjugierten Außenverzahnung vorgegeben ist und/oder eine Position und Orientierung einer Rotationsachse der konjugierten Außenverzahnung vorgegeben sind.

Wenn vorliegend von einer zu der Innenverzahnung konjugierten Außenverzahnung gesprochen wird, so handelt es sich dabei um eine Verzahnung, die mit konstantem Übersetzungsverhältnis, d.h. ohne einen Drehwinkelfehler, mit der Innenverzahnung abwälzen kann.

Die konjugierte Außenverzahnung kann zur Auslegung des Schleifwerkzeugs herangezogen werden. Die konjugierte Außenverzahnung kann als virtuelle, konjugierte Außenverzahnung bereitgestellt werden und in einem rechnergestützten Verfahren mittels einer Software virtuell erzeugt werden und durch Verzahnungsparameter eines außenverzahnten Zahnrads definiert sein. Zu diesen Parametern zählen z.B. Modul, Zähnezahl, Teilung, Teilkreisdurchmesser, Schrägungswinkel usw.

Die Angabe der konjugierten Außenverzahnung bildet daher insbesondere einen Zwischenschritt während der Auslegung und Gestaltung des schneckenförmigen Schleifwerkzeugs, um ein zu der zu schleifenden Innenverzahnung passendes Flankenprofil des Schneckengangs der Schleifschnecke zu erzeugen, die ein Schleifen der Innenverzahnung im kontinuierlichen Wälzeingriff ermöglicht.

Es kann vorgesehen sein, dass das Flankenprofil des Schleifwerkzeugs während des Wälzschleifens, betrachtet in einer Stirnschnittebene der Innenverzahnung, dem Flankenprofil der zu der Innenverzahnung konjugierten Außenverzahnung in dieser Stirnschnittebene entspricht.

Es kann vorgesehen sein, dass das Flankenprofil des Schleifwerkzeugs während des Wälzschleifens, betrachtet in einer Normalschnittebene der Innenverzahnung, dem Flankenprofil der zu der Innenverzahnung konjugierten Außenverzahnung in dieser Normalschnittebene entspricht.

Die Zähnezahl der konjugierten Außenverzahnung kann nicht ganzzahlig sein. Es versteht sich, dass ein real hergestelltes Zahnrad mit einer nicht ganzzahligen Zähnezahl in der Praxis nicht lauffähig wäre. Dies ist jedoch nicht notwendig, da die konjugierte Außenverzahnung lediglich zum Bestimmen der erforderlichen Form des Flankenprofils des Schleifwerkzeugs dient.

Zwischen der Innenverzahnung und dem schneckenförmigen Schleifwerkzeug kann insbesondere ein ganzzahliges Überdeckungsverhältnis bestehen, wobei das Überdeckungsverhältnis insbesondere die Gesamtüberdeckung ist. Die Gesamtüberdeckung ist in bekannter Weise die Summe einer Profilüberdeckung und einer Sprungüberdeckung der Verzahnung. Es versteht sich, dass die Sprungüberdeckung für eine Geradverzahnung gleich Null ist und für eine Schrägverzahnung größer Null ist.

Soweit ein ganzzahliges Überdeckungsverhältnis vorgegeben ist, kann insbesondere über das Angeben einer konjugierten Außenverzahnung mit nicht ganzzahliger Zähnezahl erreicht werden, dass dieses Überdeckungsverhältnis genau eingehalten wird, um die dafür erforderliche Form des Flankenprofils zu erzeugen.

Es kann vorgesehen sein, dass ein Kopfkrümmungsradius des schneckenförmigen Schleifwerkzeugs während des Wälzschleifens, betrachtet in einer Stirnschnittebene der Innenverzahnung, einem Kopfkreisradius eines Kopfkreises der konjugierten Außenverzahnung entspricht.

Eine Rotationsachse der Innenverzahnung und die Rotationsachse der konjugierten Außenverzahnung können parallel zueinander orientiert sein.

Es kann vorgesehen sein, dass eine entlang einer Rotationsachse des schneckenförmigen Schleifwerkzeugs gemessene Breite des schneckenförmigen Schleifwerkzeugs mindestens eine Breite einer vorgegebenen Profilausbildungszone überdeckt. Dabei kann insbesondere gelten : B ≥ P*cos (NW), wobei der Winkel NW die Summe eines Schneckensteigungswinkels und eines Schrägungswinkels der Innenverzahnung ist, B die entlang der Rotationsachse des schneckenförmigen Schleifwerkzeugs gemessene Breite des schneckenförmigen Schleifwerkzeugs ist und P die Breite der vorgegebenen Profilausbildungszone ist, wobei die Breite der vorgegebenen Profilausbildungszone senkrecht zu einer die Rotationsachse der Innenverzahnung und die Rotationsachse der Außenverzahnung aufweisenden Ebene gemessen wird. Es versteht sich, dass der Schneckensteigungswinkel und der Schrägungswinkel vorzeichenbehaftet berücksichtigt werden.

Die Innenverzahnung kann ein innenverzahntes Stirnrad sein. Das Stirnrad kann ein geradverzahntes oder ein schrägverzahntes Stirnrad sein.

Die Innenverzahnung kann eine innenverzahnte Beveloidverzahnung sein. Die Beveloidverzahnung hat in bekannter Weise eine entlang der Zahnbreite veränderliche Profilverschiebung, insbesondere eine entlang der Zahnbreite linear veränderliche Profilverschiebung. Die Beveloidverzahnung kann eine geradverzahnte oder eine schrägverzahnte Beveloidverzahnung sein.

Es kann vorgesehen sein, dass linke und rechte Flanken der Innenverzahnung gleichzeitig in einer Zustellung wälzgeschliffen werden. Gemäß alternativer Ausgestaltungen des Verfahrens kann vorgesehen ein, dass linke und rechte Flanken der Innenverzahnung separat voneinander in zwei Zustellungen wälzgeschliffen werden, wobei in einer ersten Zustellung linke Flanken und in einer zweiten Zustellung rechte Flanken der Innenverzahnung geschliffen werden, oder umgekehrt.

Weitere Einzelheiten und Vorteile der Erfindung werden im Folgenden anhand von Ausführungsbeispielen und mit Bezug auf die Zeichnung beschrieben. Es zeigen jeweils schematisch:
- Fig. 1: eine zu schleifende Innenverzahnung mit einer konjugierten Außenverzahnung;
- Fig. 2: eine vergrößerte Ansicht der zu schleifenden Innenverzahnung mit der konjugierten Außenverzahnung;
- Fig. 3: die zu schleifende Innenverzahnung mit der konjugierten Außenverzahnung mit einem schneckenförmigen Schleifwerkzeug;
- Fig. 4: die zu schleifende Innenverzahnung mit dem schneckenförmigen Schleifwerkzeug;
- Fig. 5: die zu schleifende Innenverzahnung mit dem schneckenförmigen Schleifwerkzeug in einer weiteren Ansicht;
- Fig. 6: die zu schleifende Innenverzahnung mit dem schneckenförmigen Schleifwerkzeug in einer weiteren Ansicht;
- Fig. 7: einen Ablaufplan eines erfindungsgemäßen Verfahrens.

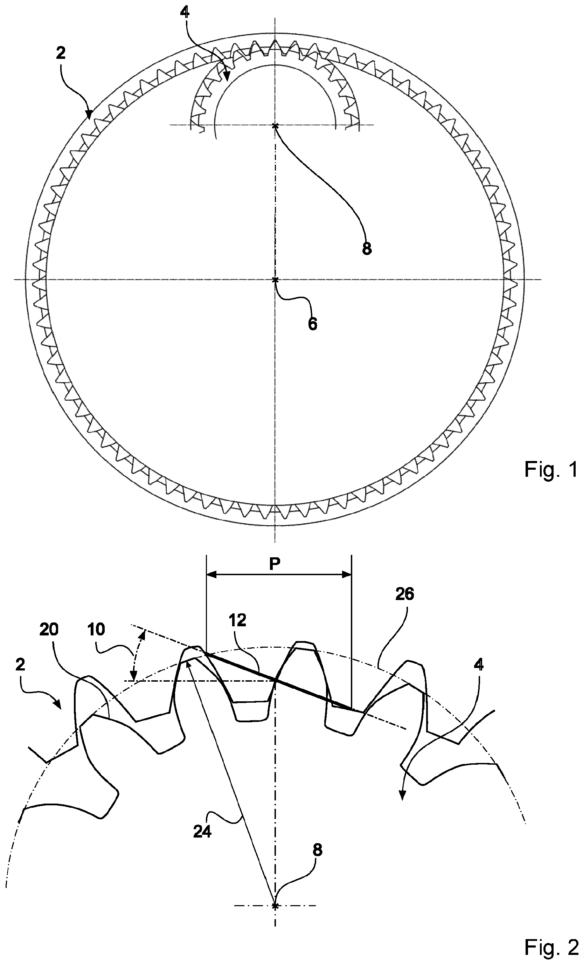

Fig. 1 zeigt eine zu schleifende Innenverzahnung 2 mit einer zur Innenverzahnung 2 konjugierten Außenverzahnung 4. Die Innenverzahnung 2 ist ein schrägverzahntes Stirnrad 2 bzw. ein schrägverzahntes Innen-Stirnrad 2. Die konjugierte Außenverzahnung 4 ist ein außenverzahntes, schrägverzahntes Stirnrad 4.

Eine Rotationsachse 6 der Innenverzahnung 2 ist parallel zu einer Rotationsachse 8 der Außenverzahnung 4 orientiert. Die Rotationsachsen 6, 8 stehen senkrecht auf der Blattebene der Figuren 1 und 2.

Fig. 2 zeigt schematisch eine vergrößerte Ansicht der zu schleifenden Innenverzahnung 2 mit der zur Innenverzahnung 2 konjugierten Außenverzahnung 4 in einer Schnittdarstellung. Fig. 2 zeigt weiter einen Eingriffswinkel 10 sowie eine Eingriffsstrecke 12 der Paarung aus Innenverzahnung 2 und Außenverzahnung 4.

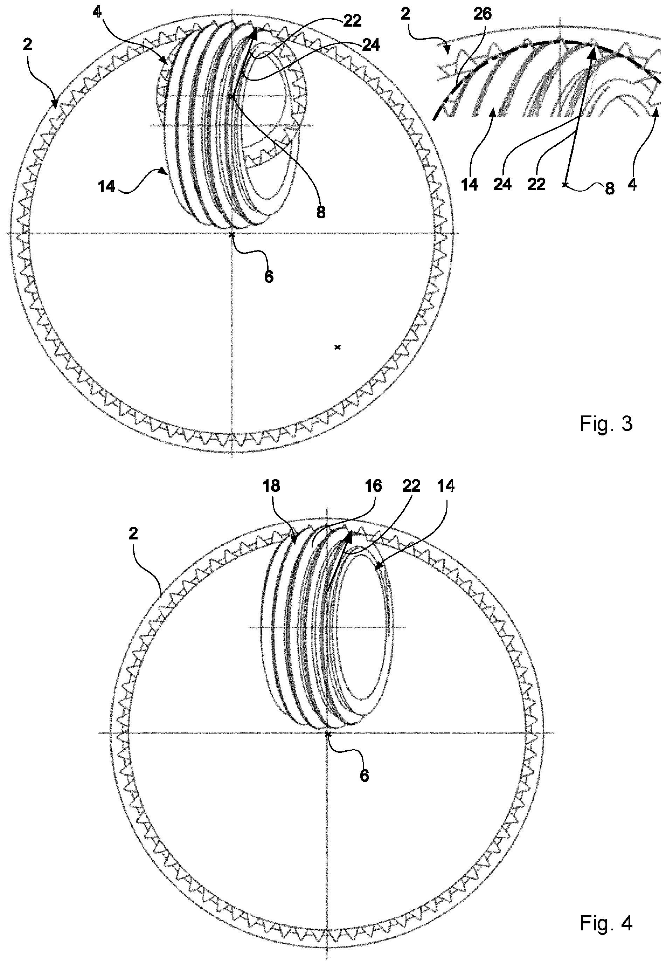

Fig. 3 zeigt die zu schleifende Innenverzahnung 2 mit der zur Innenverzahnung 2 konjugierten Außenverzahnung 4 mit einem schneckenförmigen Schleifwerkzeug 14.

Fig. 4 zeigt die zu schleifende Innenverzahnung 2 mit dem schneckenförmigen Schleifwerkzeug 14 ohne die konjugierte Außenverzahnung 4.

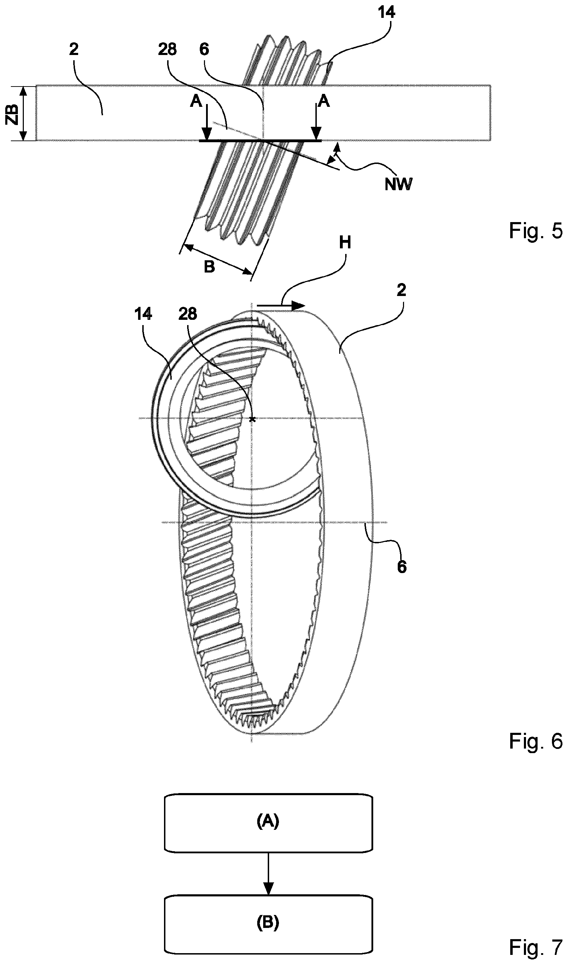

Die Figuren 5 und 6 zeigen die zu schleifende Innenverzahnung 2 mit dem schneckenförmigen Schleifwerkzeug 14 ohne die konjugierte Außenverzahnung 4 in zwei weiteren Ansichten.

Gemäß der Erfindung erfolgt in einem Verfahrensschritt (A) ein Bereitstellen der Innenverzahnung 2 und des schneckenförmigen Schleifwerkzeugs 14. In einem Verfahrensschritt (B) erfolgt ein kontinuierliches Wälzschleifen der Innenverzahnung 2 mittels des schneckenförmigen Schleifwerkzeugs 14.

Das schneckenförmige Schleifwerkzeug 14 führt während des Wälzschleifens relativ zu der Innenverzahnung 2 eine Hubbewegung H entlang einer Zahnbreite ZB der Innenverzahnung 2 aus.

Ein Flankenprofil 16 eines mit der Innenverzahnung 2 abwälzenden Schneckengangs 18 des schneckenförmigen Schleifwerkzeugs 14 entspricht einem zu der Innenverzahnung 2 konjugierten Flankenprofil 20. Das Flankenprofil 16 des Schleifwerkzeugs 14 entspricht hier dem in Fig. 2 gezeigten Flankenprofil 20 der zu der Innenverzahnung 2 konjugierten Außenverzahnung 2.

Eine Zähnezahl der konjugierten Außenverzahnung 2 ist vorliegend nicht ganzzahlig.

Ein Kopfkrümmungsradius 22 des schneckenförmigen Schleifwerkzeugs 14 während des Wälzschleifens entspricht, betrachtet in einer Stirnschnittebene der Innenverzahnung 2, einem Kopfkreisradius 24 eines Kopfkreises 26 der konjugierten Außenverzahnung 4. Demnach kann das Profil 16 des Schneckengangs 18 des schneckenförmigen Schleifwerkzeugs 14 während des Wälzschleifens analog zur konjugierten Außenverzahnung 4 mit der Innenverzahnung 2 abwälzen.

Fig. 3 zeigt eine Ausschnittvergrößerung, in der zu erkennen ist, dass, während des Wälzschleifens, der Kopfkrümmungsradius 22 des schneckenförmigen Schleifwerkzeugs 14 dem Kopfkreisradius 24 der konjugierten Außenverzahnung 4 entspricht.

Eine Stirnschnittebene ist beispielsweise parallel zur Blattebene gemäß der Ansicht der Fig. 3 orientiert bzw. kann einem Schnitt A-A oder einer Ebene parallel zum Schnitt A-A der Fig. 5 entsprechen.

Gleichermaßen entspricht das Flankenprofil 16 des Schleifwerkzeugs 14 während des Wälzschleifens, betrachtet in einer Normalschnittebene der Innenverzahnung 2, dem Flankenprofil 20 der zu der Innenverzahnung 2 konjugierten Außenverzahnung 4 in dieser Normalschnittebene. Die Normalschnittebene ist gegenüber der Stirnschnittebene um den Schrägungswinkel der Innenverzahnung 2 geneigt.

Zwischen der Innenverzahnung 2 und dem schneckenförmigen Schleifwerkzeug 14 besteht ein ganzzahliges Überdeckungsverhältnis.

Eine entlang einer Rotationsachse 28 des schneckenförmigen Schleifwerkzeugs 14 gemessene Breite B des schneckenförmigen Schleifwerkzeugs 14 überdeckt mindestens eine Breite P einer vorgegebenen Profilausbildungszone.

Dabei gilt : B ≥ P*cos(NW), wobei der Winkel NW die Summe eines Schneckensteigungswinkels des schneckenförmigen Schleifwerkzeugs 14 und des Schrägungswinkels der Innenverzahnung 2 ist, B die entlang der Rotationsachse 28 des schneckenförmigen Schleifwerkzeugs 14 gemessene Breite des schneckenförmigen Schleifwerkzeugs 14 ist und P die Breite der vorgegebenen Profilausbildungszone ist, wobei die Breite P der vorgegebenen Profilausbildungszone senkrecht zu einer die Rotationsachse 6 der Innenverzahnung 2 und die Rotationsachse 8 der Außenverzahnung 4 aufweisenden Ebene gemessen wird.

Vorliegend werden linke Flanken und rechte Flanken der Innenverzahnung 2 gleichzeitig in einer Zustellung wälzgeschliffen.

### BEZUGSZEICHEN

- 2: Innenverzahnung
- 4: Außenverzahnung
- 6: Rotationsachse
- 8: Rotationsachse
- 10: Eingriffswinkel
- 12: Eingriffsstrecke
- 14: Schleifwerkzeug
- 16: Flankenprofil
- 18: Schneckengang
- 20: Flankenprofil
- 22: Kopfkrümmungsradius
- 24: Kopfkreisradius
- 26: Kopfkreis
- 28: Rotationsachse
- (A): Verfahrensschritt
- (B): Verfahrensschritt
- B: Schneckenbreite
- P: Breite Profilausbildungszone
- H: Hubbewegung
- ZB: Zahnbreite

## Patentansprüche

1. Verfahren, mit den Verfahrensschritten:
Bereitstellen einer Innenverzahnung (2);
Bereitstellen eines schneckenförmigen Schleifwerkzeugs (14);
Kontinuierliches Wälzschleifen der Innenverzahnung (2) mittels des schneckenförmigen Schleifwerkzeugs (14);
wobei das schneckenförmige Schleifwerkzeug (14) während des Wälzschleifens relativ zu der Innenverzahnung (2) eine Hubbewegung (H) entlang einer Zahnbreite (ZB) der Innenverzahnung (2) ausführt und
wobei ein Flankenprofil (16) eines mit der Innenverzahnung (2) abwälzenden Schneckengangs (18) des schneckenförmigen Schleifwerkzeugs (14) einem zur Innenverzahnung (2) konjugierten Flankenprofil (20) entspricht.

2. Verfahren nach Anspruch 1,
**dadurch gekennzeichnet, dass**
das Flankenprofil (16) des Schleifwerkzeugs (14) einem Flankenprofil (20) einer zu der Innenverzahnung (2) konjugierten Außenverzahnung (4) entspricht,
wobei eine Zähnezahl der konjugierten Außenverzahnung (4) vorgegeben ist und/oder eine Position und Orientierung einer Rotationsachse (8) der konjugierten Außenverzahnung (4) vorgegeben sind.

3. Verfahren nach Anspruch 2,
**dadurch gekennzeichnet, dass**
das Flankenprofil (16) des Schleifwerkzeugs (14) während des Wälzschleifens, betrachtet in einer Stirnschnittebene der Innenverzahnung (2), dem Flankenprofil (20) der zu der Innenverzahnung (2) konjugierten Außenverzahnung (4) in dieser Stirnschnittebene entspricht.

4. Verfahren nach Anspruch 2 oder 3,
**dadurch gekennzeichnet, dass**
das Flankenprofil (16) des Schleifwerkzeugs (14) während des Wälzschleifens, betrachtet in einer Normalschnittebene der Innenverzahnung (2), dem Flankenprofil (20) der zu der Innenverzahnung (2) konjugierten Außenverzahnung (4) in dieser Normalschnittebene entspricht.

5. Verfahren nach einem der Ansprüche 2 - 4,
**dadurch gekennzeichnet, dass**
die Zähnezahl der konjugierten Außenverzahnung (4) nicht ganzzahlig ist.

6. Verfahren nach einem der Ansprüche 2 - 5,
**dadurch gekennzeichnet, dass**
eine Rotationsachse (6) der Innenverzahnung (2) und die Rotationsachse (8) der konjugierten Außenverzahnung (4) parallel zueinander orientiert sind.

7. Verfahren nach Anspruch einem der Ansprüche 2 - 6,
**dadurch gekennzeichnet, dass**
ein Kopfkrümmungsradius (22) des schneckenförmigen Schleifwerkzeugs (14) während des Wälzschleifens, betrachtet in einer Stirnschnittebene der Innenverzahnung (2), einem Kopfkreisradius (24) eines Kopfkreises (26) der konjugierten Außenverzahnung (4) entspricht.

8. Verfahren nach Anspruch einem der voranstehenden Ansprüche,
**dadurch gekennzeichnet, dass**
zwischen der Innenverzahnung (2) und dem schneckenförmigen Schleifwerkzeug (14) ein ganzzahliges Überdeckungsverhältnis besteht, wobei das Überdeckungsverhältnis insbesondere die Gesamtüberdeckung ist.

9. Verfahren nach Anspruch einem der voranstehenden Ansprüche,
**dadurch gekennzeichnet, dass**
eine entlang einer Rotationsachse (28) des schneckenförmigen Schleifwerkzeugs (14) gemessene Breite (B) des schneckenförmigen Schleifwerkzeugs (14) mindestens eine Breite (P) einer vorgegebenen Profilausbildungszone (12) überdeckt.

10. Verfahren nach Anspruch einem der voranstehenden Ansprüche,
**dadurch gekennzeichnet, dass**
- die Innenverzahnung (2) ein innenverzahntes Stirnrad (2) ist oder
- die Innenverzahnung eine innenverzahnte Beveloidverzahnung ist.

11. Verfahren nach Anspruch einem der voranstehenden Ansprüche,
**dadurch gekennzeichnet, dass**
linke und rechte Flanken der Innenverzahnung (2) gleichzeitig in einer Zustellung wälzgeschliffen werden.
